# EUROPÄISCHE PATENTANMELDUNG

(11) **EP 4 496 195 A1**
(43) Veröffentlichungstag der Anmeldung: **22.01.2025**
(21) Anmeldenummer: 24188148.1
(22) Anmeldetag: 11.07.2024
(51) Int. Cl.: H02K 15/00

(54) **VERFAHREN ZUM HERSTELLEN EINES STATORS FÜR EINE ELEKTROMASCHINE UND ELEKTROMASCHINE**

(30) Priorität: 20.07.2023 DE 102023206903
(71) Anmelder: VOLKSWAGEN AG, 38440 Wolfsburg (DE)
(72) Erfinder: Pasternok, Thomas, 34132 Kassel (DE); Shaghaghi, Arash, 34253 Lohfelden (DE); Jahn, Markus, 36145 Hofbieber - Langenbieber (DE)

(57) **Zusammenfassung**

Die vorliegende Erfindung betrifft ein Verfahren zum Herstellen eines Stators (1) für eine Elektromaschine (2), aufweisend:
- Bereitstellen eines Statorgrundkörpers (3) mit Statornuten (4), wobei in den Statornuten (4) Hairpins (5) angeordnet sind, wobei die Hairpins (5) in einer ersten Nutlage (6), mehreren inneren Nutlagen (7) sowie einer letzten Nutlage (8) in den Statornuten (4) angeordnet sind, wobei freie erste Hairpinenden (9) der Hairpins (5) voneinander separiert sind,
- Greifen von zwei direkt benachbarten ersten Hairpinenden (9) mit einem gemeinsamen Schränkwerkzeug (10),
- Gemeinsames Schränken der ersten Hairpinenden (9) mit dem gemeinsamen Schränkwerkzeug (10), und
- Verschweißen der ersten Hairpinenden (9) unterschiedlicher Statornuten (4) mit einer Schweißvorrichtung paarweise.

Ferner betrifft die Erfindung eine Elektromaschine (2), insbesondere für ein Kraftfahrzeug.

## Beschreibung

Die vorliegende Erfindung betrifft ein Verfahren zum Herstellen eines Stators für eine Elektromaschine, insbesondere für ein Kraftfahrzeug, gemäß dem Oberbegriff des unabhängigen Anspruchs 1. Ferner betrifft die Erfindung eine Elektromaschine, insbesondere für ein Kraftfahrzeug, gemäß dem Oberbegriff des nebengeordneten Anspruchs 10.

Es sind Verfahren zur Herstellung von Statoren für Elektromaschinen bekannt, bei welchen ein Statorgrundkörper des Stators mit einer Vielzahl von Hairpins bestückt wird. Hierfür weist der Statorgrundkörper eine Vielzahl von Statornuten auf, in welche die Hairpins in radialer Richtung übereinander gestapelt derart angeordnet werden, dass an einer ersten Statorstirnseite des Stators freie erste Hairpinenden der Hairpins und an einer der ersten Statorstirnseite entgegengesetzten zweiten Statorstirnseite des Stators freie zweite Hairpinenden der Hairpins in axialer Richtung hervorstehen. Alternativ können die Hairpins auch als U-Pins bereitgestellt werden, sodass an der zweiten Statorstirnseite lediglich Hairpinbögen der Hairpins angeordnet sind.

Anschließend werden die freien Hairpinenden in radialer Richtung verteilt. Dieser Vorgang wird auch als "Aufweiten" bezeichnet. Das Dokument DE 10 2018 206 004 A1 zeigt eine Vorrichtung und ein Verfahren zum Aufweiten der Hairpinenden.

Nach dem Aufweiten werden die freien Hairpinenden in radialer Richtung geschränkt, um miteinander zu verschweißende Hairpinenden zueinander auszurichten. Vorrichtungen und Verfahren zum Schränken der Hairpinenden sind aus den Dokumenten DE 10 2019 211 713 A1 und US 2018 / 375 409 A1 bekannt. Hierfür werden die freien Hairpinenden jeweils in ein Schränkwerkzeug eingespannt und derart geschränkt, dass in radialer Richtung benachbarte Hairpinenden einer Statornut in unterschiedliche Richtungen geschränkt werden.

Bekannte Verfahren zum Herstellen eines Stators haben den Nachteil, dass für das Schränken für jede Drahtlage in der Statornut ein einzelnes, NC-gesteuertes Schränkwerkzeug erforderlich ist. Dies führt zu erhöhten Herstellungskosten. Ferner weisen Statoren mit abwechselnd in unterschiedliche Richtung geschränkten Hairpinenden einen vergrößerten Bauraumbedarf auf.

Schließlich sind die Hairpinenden nach dem Schränken oftmals sehr dicht nebeneinander angeordnet, sodass eine zusätzliche bzw. besonders aufwendige elektrische Isolierung erforderlich ist, um Kurzschlüsse während des Betriebs der Elektromaschine zu vermeiden.

Es ist daher Aufgabe der vorliegenden Erfindung, die voranstehend beschriebenen Nachteile bei einem Verfahren zum Herstellen eines Stators für eine Elektromaschine, insbesondere für ein Kraftfahrzeug, sowie bei einer Elektromaschine, insbesondere für ein Kraftfahrzeug, zu beheben oder zumindest teilweise zu beheben. Insbesondere ist es Aufgabe der vorliegenden Erfindung ein Verfahren und eine Elektromaschine zu schaffen, die auf eine einfache und kostengünstige Art und Weise einen verbesserten Herstellungsprozess aufweisen, beispielsweise durch Vermeiden eines übermäßigen Werkzeugbedarfs und/oder Reduzieren eines Bauraumbedarfs und/oder eine verbesserte Isolierung.

Die voranstehende Aufgabe wird durch die Patentansprüche gelöst. Demnach wird die Aufgabe durch ein Verfahren zum Herstellen eines Stators für eine Elektromaschine mit den Merkmalen des unabhängigen Anspruchs 1 sowie durch eine Elektromaschine mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Elektromaschine und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Herstellen eines Stators für eine Elektromaschine, insbesondere für ein Kraftfahrzeug, gelöst. Das Verfahren weist auf:
- Bereitstellen eines Statorgrundkörpers mit Statornuten, wobei in den Statornuten Hairpins angeordnet sind, wobei die Hairpins in einer ersten Nutlage, mehreren inneren Nutlagen sowie einer letzten Nutlage in den Statornuten angeordnet sind, wobei freie erste Hairpinenden der Hairpins aus dem Statorgrundkörper herausragen,
- Greifen von zwei in radialer Richtung direkt benachbarten ersten Hairpinenden mit einem gemeinsamen Schränkwerkzeug,
- Gemeinsames Schränken der ersten Hairpinenden mit dem gemeinsamen Schränkwerkzeug, und
- Verschweißen der ersten Hairpinenden unterschiedlicher Statornuten mit einer Schweißvorrichtung.

Zunächst wird der Statorgrundkörper mit einer Statorlängsachse bereitgestellt. Der Statorgrundkörper ist vorzugsweise als Blechpaket aus mehreren koaxial gestapelten Statorscheiben, beispielsweise aus Elektroblech, ausgebildet. Die Statorscheiben sind vorzugsweise gegeneinander elektrisch isoliert, beispielsweise durch Backlack, Papier oder dergleichen. Vorzugsweise sind die Statorscheiben miteinander verpresst. Die Statornuten sind im Statorgrundkörper ausgebildet und weisen in radialer Richtung eine Nuttiefe, in Umfangsrichtung eine Nutbreite sowie entlang der Statorlängsachse eine Nutlänge auf.

Die Hairpins sind in den Statornuten in radialer Richtung in mehreren Nutlagen angeordnet. Eine der Statorlängsachse am nächsten gelegene Nutlage wird im Rahmen der Erfindung als "erste Nutlage" bezeichnet. Eine von der Statorlängsachse am weitesten entfernte Nutlage wird im Rahmen der Erfindung als "letzte Nutlage" bezeichnet. Die zwischen der ersten Nutlage und der letzten Nutlagen angeordneten Nutlagen werden im Rahmen der Erfindung als "innere Nutlagen" bezeichnet. Die Hairpins sind vorzugsweise derart in den Statornuten angeordnet, dass in jeder Statornut pro Nutlage ein Hairpin angeordnet ist. Vorzugsweise weisen die Hairpins eine Hairpinbreite auf, welche der Nutbreite entsprechen oder nur geringfügig kleiner als die Nutbreite sind.

An der ersten Statorstirnseite des Statorgrundkörpers angeordnete, freie erste Hairpinenden ragen aus dem Statorgrundkörper heraus. Die ersten Hairpinenden sind vorzugsweise voneinander separiert. Das bedeutet, dass die Hairpins in radialer Richtung derart umgeformt sind, dass die benachbarten ersten Hairpinenden einer Statornut in radialer Richtung einen vergrößerten Abstand zueinander aufweisen als innerhalb der Statornut. Innerhalb der Statornut sind die Hairpins vorzugsweise direkt nebeneinander angeordnet und allenfalls durch einen Isolator, wie beispielsweise Papier, voneinander beabstandet.

Mit einem Schränkwerkzeug werden zwei in radialer Richtung direkt benachbarte erste Hairpinenden gegriffen, beispielsweise durch Aufschieben des Schränkwerkzeugs, Schließen von Klemmbacken des Schränkwerkzeugs oder dergleichen. Somit werden zwei erste Hairpinenden benachbarter Nutlagen gegriffen. Vorzugsweise werden hierbei die anderen ersten Hairpinenden derselben beiden Nutlagen von demselben Schränkwerkzeug mit gegriffen. Ein Aufschieben kann beispielsweise entlang einer Längserstreckung der ersten Hairpinenden oder quer zur Längserstreckung erfolgen. Das Schränkwerkzeug kann beispielsweise eine Schränkkrone oder dergleichen aufweisen. Vorzugsweise werden weitere zwei in radialer Richtung direkt benachbarte erste Hairpinenden durch jeweils ein anderes Schränkwerkzeug gegriffen.

Durch eine Bewegung des Schränkwerkzeugs in Umfangsrichtung des Statorgrundkörpers werden die gemeinsam gegriffenen ersten Hairpinenden gemeinsam in eine Richtung geschränkt. Vorzugsweise werden hierbei die anderen ersten Hairpinenden derselben beiden Nutlagen von demselben Schränkwerkzeug in dieselbe Richtung geschränkt. Vorzugsweise werden die anderen paarweise gegriffenen ersten Hairpinenden durch das jeweils entsprechende Schränkwerkzeug gemeinsam in eine Richtung geschränkt. Hierbei ist es bevorzugt, dass in den Statornuten benachbarte Paare erster Hairpinenden in unterschiedliche Umfangsrichtungen geschränkt werden. Auf diese Weise ist eine besonders kompakte Bauweise des Stators erzielbar.

Schließlich werden die ersten Hairpinenden unterschiedlicher Statornuten mit der Schweißvorrichtung jeweils paarweise verschweißt. Hierbei ist es bevorzugt, dass ein gemeinsam mit einem Schränkwerkzeug geschränktes Paar in radialer Richtung benachbarter erster Hairpinenden nicht miteinander, sondern vorzugsweise mit jeweils einem anderen in radialer Richtung benachbarten ersten Hairpinende verschweißt wird. Auf diese Weise werden elektrische Leiter gebildet, die sich mindestens zweimal durch den Statorgrundkörper erstrecken. Wenn die Hairpins als U-Pins bereitgestellt, werden auf diese Weise fortlaufende elektrische Leiter gebildet, welche sich noch öfter durch den Statorgrundkörper erstrecken.

Ein erfindungsgemäßes Verfahren zum Herstellen eines Stators für eine Elektromaschine hat gegenüber herkömmlichen Verfahren den Vorteil, dass mit einfachen Mitteln sowie auf eine kostengünstige Art und Weise durch das paarweise Zusammenfassen der ersten Hairpinenden die Anzahl der verwendeten Schränkwerkzeuge reduziert ist. Zudem ist durch das gemeinsame Schränken benachbarter erster Hairpinenden der Bauraumbedarf für den Stator reduzierbar. Schließlich weisen die Paare der ersten Hairpinenden nach dem Schränken zu benachbarten Paaren erster Hairpinenden einen vergrößerten Abstand auf, sodass eine elektrische Isolierung des Stators verbessert bzw. leichter am Stator anordenbar ist.

Gemäß einer bevorzugten Weiterentwicklung der Erfindung kann bei einem Verfahren vorgesehen sein, dass das erste Hairpinende der ersten Nutlage und/oder das erste Hairpinende der letzten Nutlage mit jeweils einem eigenen Schränkwerkzeug einzeln gegriffen und geschränkt wird. Hierbei ist es bevorzugt, dass die Schränkrichtung des ersten Hairpinendes der ersten Nutlage und/oder des ersten Hairpinendes der letzten Nutlage der Schränkrichtung des benachbarten ersten Hairpinendes entgegengesetzt ist. Vorzugsweise werden mehrere oder sämtliche erste Hairpinenden der ersten Nutlage von dem eigenen Schränkwerkzeug gegriffen und geschränkt. Weiter bevorzugt werden mehrere oder sämtliche erste Hairpinenden der letzten Nutlage von dem eigenen Schränkwerkzeug gegriffen und geschränkt. Somit ist es bevorzugt, dass die ersten Hairpinenden der ersten Nutlage von einem ersten Schränkwerkzeug und die ersten Hairpinenden der letzten Nutlage von einem letzten Schränkwerkzeug gegriffen und geschränkt werden. Dies hat den Vorteil, dass mit einfachen Mitteln sowie auf eine kostengünstige Art und Weise die Ausnutzung des vorhandenen Bauraums verbessert ist. Somit ist eine besonders kompakte Bauform des Stators erzielbar. Ferner ist die elektrische Isolierung des Stators hierdurch weiter verbesserbar.

Es ist erfindungsgemäß bevorzugt, dass die ersten Hairpinenden der inneren Nutlagen jeweils paarweise mit einem gemeinsamen Schränkwerkzeug miteinander gegriffen und geschränkt werden. Vorzugsweise werden die ersten Hairpinenden sämtlicher innerer Nutlagen jeweils paarweise mit einem gemeinsamen Schränkwerkzeug miteinander gegriffen und geschränkt. Das Schränken benachbarter Paare erster Hairpinenden erfolgt vorzugsweise in entgegengesetzte Richtungen. Durch das paarweise Schränken in unterschiedliche Richtungen ist ein besonders großer Abstand zwischen benachbarten ersten Hairpinenden unterschiedlicher Schränkrichtungen bewirkbar. Dies hat den Vorteil, dass mit einfachen Mitteln sowie auf eine kostengünstige Art und Weise die Ausnutzung des vorhandenen Bauraums verbessert ist. Somit ist eine besonders kompakte Bauform des Stators erzielbar. Ferner ist die elektrische Isolierung des Stators hierdurch weiter verbesserbar.

Weiter bevorzugt wird ein Statorgrundkörper bereitgestellt, bei welchem freie zweite Hairpinenden der Hairpins aus dem Statorgrundkörper harausragen, wobei die ersten Hairpinenden und die zweiten Hairpinenden an entgegengesetzten Enden der Hairpins ausgebildet sind, wobei zwei in radialer Richtung direkt benachbarte zweite Hairpinenden mit einem gemeinsamen Schränkwerkzeug gegriffen und gemeinsam geschränkt werden, und wobei die zweiten Hairpinenden unterschiedlicher Statornuten mit der Schweißvorrichtung verschweißt werden. Mit anderen Worten werden vorzugsweise Hairpins verwendet, welche als sogenannte I-Pins ausgebildet sind. Während U-Pins jeweils zwei erste Hairpinenden aufweisen, die beide aus der ersten Statorstirnseite des Statorgrundkörpers herausragen, weisen I-Pins jeweils ein erstes Hairpinende und ein zweites Hairpinende auf, wobei das erste Hairpinende aus der ersten Statorstirnseite und das zweite Hairpinende aus der zweiten Statorstirnseite herausragt. Zur Herstellung der Statorwicklung sind bei I-Pins Schränkungen und Schweißungen der Hairpins an beiden Statorstirnseiten erforderlich. Vorzugsweise werden U-Pins und I-Pins kombiniert verwendet, wobei vorzugsweise die Anzahl der U-Pins größer ist als die Anzahl der I-Pins. Vorzugsweise werden die I-Pins zum Herstellen einer Verschaltung der Elektromaschine mit einer Leistungselektronik, vorzugsweise auf eine Seite des Stators auf welcher die U-Pins um etwa 180° umgebogen sind, verwendet. Dies hat den Vorteil, dass mit einfachen Mitteln sowie auf eine kostengünstige Art und Weise die Ausnutzung des vorhandenen Bauraums verbessert ist. Somit ist eine besonders kompakte Bauform des Stators erzielbar. Ferner ist die elektrische Isolierung des Stators hierdurch weiter verbesserbar.

In einer besonders bevorzugten Ausgestaltung der Erfindung kann bei einem Verfahren vorgesehen sein, dass das zweite Hairpinende der ersten Nutlage und/oder der letzten Nutlage mit jeweils einem eigenen Schränkwerkzeug einzeln gegriffen und geschränkt wird. Hierbei ist es bevorzugt, dass die Schränkrichtung des zweiten Hairpinendes der ersten Nutlage und/oder des zweiten Hairpinendes der letzten Nutlage der Schränkrichtung des benachbarten zweiten Hairpinendes entgegengesetzt ist. Dies hat den Vorteil, dass mit einfachen Mitteln sowie auf eine kostengünstige Art und Weise die Ausnutzung des vorhandenen Bauraums verbessert ist. Somit ist eine besonders kompakte Bauform des Stators erzielbar. Ferner ist die elektrische Isolierung des Stators hierdurch weiter verbesserbar.

Vorzugsweise werden die zweiten Hairpinenden der inneren Nutlagen jeweils paarweise mit einem gemeinsamen Schränkwerkzeug miteinander gegriffen und geschränkt. Vorzugsweise werden die zweiten Hairpinenden sämtlicher innerer Nutlagen jeweils paarweise mit einem gemeinsamen Schränkwerkzeug miteinander gegriffen und geschränkt. Das Schränken benachbarter Paare zweiter Hairpinenden erfolgt vorzugsweise in entgegengesetzte Richtungen. Durch das paarweise Schränken in unterschiedliche Richtungen ist ein besonders großer Abstand zwischen benachbarten zweiten Hairpinenden unterschiedlicher Schränkrichtungen bewirkbar. Dies hat den Vorteil, dass mit einfachen Mitteln sowie auf eine kostengünstige Art und Weise die Ausnutzung des vorhandenen Bauraums verbessert ist. Somit ist eine besonders kompakte Bauform des Stators erzielbar. Ferner ist die elektrische Isolierung des Stators hierdurch weiter verbesserbar.

Gemäß einer bevorzugten Ausführungsform der Erfindung wird der Statorgrundkörper mit acht Hairpins pro Statornut bereitgestellt, wobei fünf Schränkwerkzeuge verwendet werden, wobei die ersten Hairpinenden der äußeren Nutlagen mit jeweils einem der Schränkwerkzeuge und die ersten Hairpinenden benachbarter innerer Nutlagen jeweils paarweise mit einem der Schränkwerkzeuge gegriffen und geschränkt werden. Alternativ kann der Statorgrundkörper mit vier Hairpins pro Statornut bereitgestellt werden, wobei drei Schränkwerkzeuge verwendet werden. In diesem Fall werden die ersten Hairpinenden der äußeren Nutlagen mit jeweils einem der Schränkwerkzeuge und die beiden ersten Hairpinenden der inneren Nutlagen paarweise mit einem der Schränkwerkzeuge gegriffen und geschränkt. Alternativ kann der Statorgrundkörper mit sechs Hairpins pro Statornut bereitgestellt werden, wobei vier Schränkwerkzeuge verwendet werden. In diesem Fall werden die ersten Hairpinenden der äußeren Nutlagen mit jeweils einem der Schränkwerkzeuge und die ersten Hairpinenden benachbarter innerer Nutlagen jeweils paarweise mit einem der Schränkwerkzeuge gegriffen und geschränkt. Dies hat den Vorteil, dass mit einfachen Mitteln sowie auf eine kostengünstige Art und Weise ein Stator mit einem besonders kompakten sowie wirtschaftlich zweckmäßigen Aufbau herstellbar ist.

Besonders bevorzugt werden die paarweise mittels eines der Schränkwerkzeuge gegriffenen ersten Hairpinenden in radialer Richtung voneinander separiert. Das Separieren erfolgt vorzugsweise derart, dass ein Abstand in radialer Richtung zwischen den jeweiligen ersten Hairpinenden vergrößert wird. Das Separieren erfolgt gemäß dieser bevorzugten Ausführungsform nach dem gemeinsamen Schränken. Hierbei ist es erfindungsgemäß bevorzugt, dass die ersten Hairpinenden des jeweils in radialer Richtung weiter außen liegenden Hairpins in radialer Richtung nach außen und/oder die ersten Hairpinenden des jeweils in radialer Richtung weiter innen liegenden Hairpins in radialer Richtung nach innen gebogen werden. Dies hat den Vorteil, dass mit einfachen Mitteln sowie auf eine kostengünstige Art und Weise die Ausnutzung des vorhandenen Bauraums verbessert ist. Somit ist eine besonders kompakte Bauform des Stators erzielbar.

Es ist erfindungsgemäß weiter bevorzugt, dass das in radialer Richtung weiter innen liegende erste Hairpinende in Richtung einer Statorlängsachse des Statorgrundkörpers geformt und/oder das in radialer Richtung weiter außen liegende erste Hairpinende von der Statorlängsachse weg geformt wird. Besonders bevorzugt wird das weiter innen liegende erste Hairpinende zur Statorlängsachse hin und das in radialer Richtung weiter außen liegende erste Hairpinende von der Statorlängsachse weg geformt. Dies hat den Vorteil, dass mit einfachen Mitteln sowie auf eine kostengünstige Art und Weise die Ausnutzung des vorhandenen Bauraums verbessert ist. Somit ist eine besonders kompakte Bauform des Stators erzielbar.

Gemäß einem zweiten Aspekt der Erfindung wird die Aufgabe durch eine Elektromaschine, insbesondere für ein Kraftfahrzeug, gelöst. Die Elektromaschine weist einen Stator und einen koaxial zum Stator angeordneten Rotor auf. Erfindungsgemäß ist der Stator durch ein erfindungsgemäßes Verfahren hergestellt.

Demnach weist der Stator einen Statorgrundkörper mit einer Statorlängsachse auf. Der Statorgrundkörper ist vorzugsweise als Blechpaket aus mehreren koaxial gestapelten Statorscheiben, beispielsweise aus Elektroblech, ausgebildet. Die Statorscheiben sind vorzugsweise gegeneinander elektrisch isoliert, beispielsweise durch Backlack, Papier oder dergleichen. Vorzugsweise sind die Statorscheiben miteinander verpresst. Die Statornuten sind im Statorgrundkörper ausgebildet und weisen in radialer Richtung eine Nuttiefe, in Umfangsrichtung eine Nutbreite sowie entlang der Statorlängsachse eine Nutlänge auf.

Die Hairpins sind in den Statornuten in radialer Richtung in mehreren Nutlagen angeordnet. Die Hairpins sind vorzugsweise derart in den Statornuten angeordnet, dass in jeder Statornut pro Nutlage ein Hairpin angeordnet ist. Vorzugsweise weisen die Hairpins eine Hairpinbreite auf, welche der Nutbreite entsprechen oder nur geringfügig kleiner als die Nutbreite sind. Innerhalb der Statornut sind die Hairpins vorzugsweise direkt nebeneinander angeordnet und allenfalls durch einen Isolator, wie beispielsweise Papier, voneinander beabstandet.

An der ersten Statorstirnseite des Statorgrundkörpers angeordnete, erste Hairpinenden ragen aus den Statornuten des Statorgrundkörpers heraus, sind voneinander separiert, zumindest teilweise paarweise geschränkt und mit jeweils einem ersten Hairpinende einer anderen Statornut. Vorzugsweise sind in den Statornuten benachbarte Paare erster Hairpinenden in unterschiedliche Umfangsrichtungen geschränkt.

Bei der erfindungsgemäßen Elektromaschine ergeben sich sämtliche Vorteile, die bereits zu einem Verfahren zum Herstellen eines Stators für eine gemäß dem ersten Aspekt der Erfindung beschrieben worden sind. Demnach hat die erfindungsgemäße Elektromaschine gegenüber herkömmlichen Elektromaschinen den Vorteil, dass mit einfachen Mitteln sowie auf eine kostengünstige Art und Weise durch das paarweise Zusammenfassen der ersten Hairpinenden die Anzahl der verwendeten Schränkwerkzeuge reduziert ist. Zudem ist durch das gemeinsame Schränken benachbarter erster Hairpinenden der Bauraumbedarf für den Stator reduzierbar. Schließlich weisen die Paare der ersten Hairpinenden nach dem Schränken zu benachbarten Paaren erster Hairpinenden einen vergrößerten Abstand auf, sodass eine elektrische Isolierung des Stators verbessert bzw. leichter am Stator anordenbar ist.

Eine erfindungsgemäße Elektromaschine sowie ein erfindungsgemäßes Verfahren werden nachfolgend anhand von Zeichnungen näher erläutert. Es zeigen jeweils schematisch:
- Figur 1: in einer perspektivischen Explosionsansicht eine Elektromaschine gemäß einer bevorzugten ersten Ausführungsform der Erfindung,
- Figur 2: in einer Detailansicht eine bevorzugte Ausführungsform eines Stators während des Schränkens, und
- Figur 3: in einem Ablaufdiagramm eine bevorzugte Ausführungsform eines erfindungsgemäßen Verfahrens.

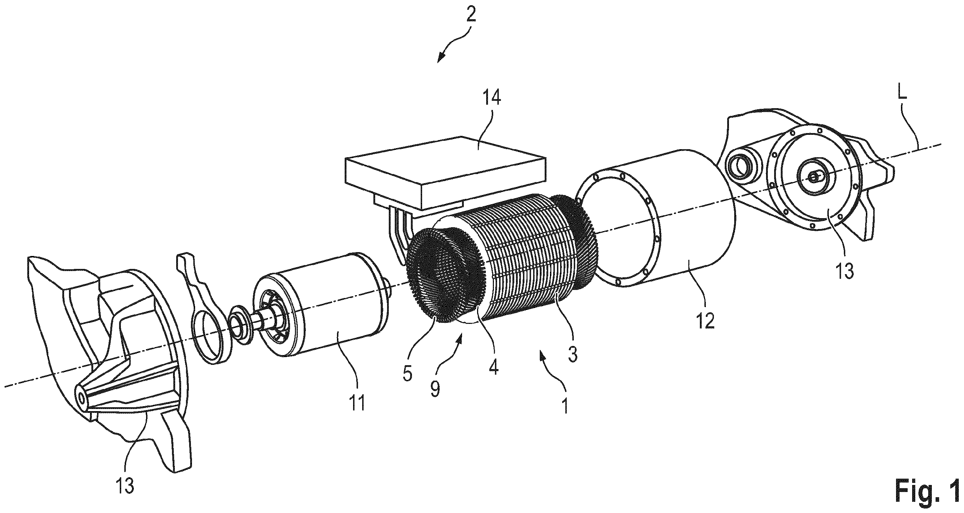

Elemente mit gleicher Funktion und Wirkungsweise sind in den Figuren 1 bis 3 jeweils mit denselben Bezugszeichen versehen.

In Fig. 1 ist eine Elektromaschine 2 gemäß einer bevorzugten ersten Ausführungsform der Erfindung schematisch in einer perspektivischen Explosionsansicht dargestellt. Die Elektromaschine 2 weist einen Stator 1 auf, welcher mittels eines erfindungsgemäßen Verfahrens hergestellt ist. Der Stator 1 weist einen Statorgrundkörper 3 auf, in welchem eine Vielzahl von Statornuten 4 ausgebildet ist. In den Statornuten 4 sind jeweils mehrere Hairpins 5 nebeneinander angeordnet. Erste Hairpinenden 9 der Hairpins 5 sind geschränkt, wobei erste Hairpinenden 9 aus unterschiedlichen Statornuten 4 jeweils paarweise miteinander verschweißt sind. Somit bilden die Hairpins 5 eine Statorwicklung des Stators 1.

Ferner weist die Elektromaschine 2 einen koaxial zum Stator 1 angeordneten Rotor 11 und ein Motorgehäuse 12 auf, welches um den Stator 1 herum anordenbar und über zwei Gehäusedeckel 13 der Elektromaschine 2 in axialer Richtung verschließbar ist. Zum Bestromen der Statorwicklung weist die Elektromaschine 2 eine Leistungselektronik 14 auf, die am Motorgehäuse 12 gehalten sowie mit der Statorwicklung elektrisch gekoppelt ist.

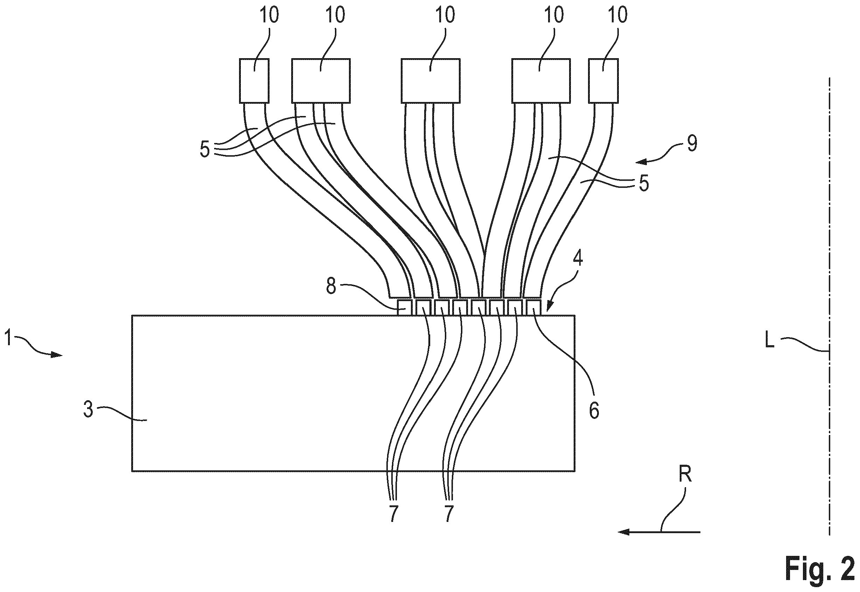

Fig. 2 zeigt eine bevorzugte Ausführungsform eines Stators 1 während des Schränkens schematisch in einer Detailansicht. In dieser Ansicht ist ein Teil des Statorgrundkörpers 3 gezeigt, welcher sich im die Statorlängsachse L herum erstreckt. In einer Statornut 4 sind acht Hairpins 5 in unterschiedlichen Nutlagen angeordnet. Ein der Statorlängsachse L am nächsten angeordneter Hairpin 5 ist in einer ersten Nutlage 6 angeordnet. Ein der Statorlängsachse L am weitesten angeordneter Hairpin 5 ist in einer letzten Nutlage 8 angeordnet. Die zwischen der ersten Nutlage 6 und der letzten Nutlage 8 angeordneten Hairpins 5 sind in inneren Nutlagen 7 angeordnet. In jeder Nutlage der Statornut 4 ist jeweils ein Hairpin 5 angeordnet.

Erste Hairpinenden 9 der Hairpins 5 ragen entlang der Statorlängsachse L aus der Statornut 4 heraus und sind in radialer Richtung R teilweise separiert. Die ersten Hairpinenden 9 der Hairpins 5 der ersten Nutlage 6 und der letzten Nutlage 8 sind jeweils einzeln separiert und jeweils von einem Schränkwerkzeug 10 gegriffen. Die ersten Hairpinenden 9 der Hairpins 5 der inneren Nutlage 7 sind jeweils paarweise separiert und paarweise von einem gemeinsamen Schränkwerkzeug 10 gegriffen. Das Schränken erfolgt beispielsweise derart, dass das erste Hairpinende 9 der ersten Nutlage 6 in die Zeichenebene hinein geschränkt und mit den benachbarten Schränkwerkzeugen 10 abwechselnd aus der Zeichenebene heraus und in die Zeichenebene hinein geschränkt wird. Somit wird das erste Hairpinende 9 der letzten Nutlage 8 wieder in die Zeichenebene hinein geschränkt.

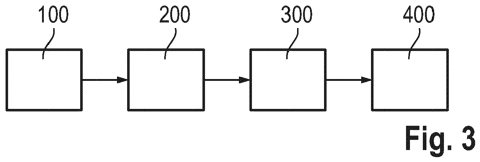

In Fig. 3 ist eine bevorzugte Ausführungsform eines erfindungsgemäßen Verfahrens schematisch in einem Ablaufdiagramm dargestellt. In einer ersten Verfahrensaktion 100 wird ein Statorgrundkörper 3 mit Statornuten 4 bereitgestellt. In den Statornuten 4 sind jeweils mehrere, beispielsweise acht, Hairpins 5 angeordnet. Die Hairpins 5 sind in den Statornuten 4 jeweils in einer ersten Nutlage 6, mehreren inneren Nutlagen 7 sowie einer letzten Nutlage 8 angeordnet. Freie erste Hairpinenden 9 der Hairpins 5 sind - zumindest teilweise - voneinander separiert. In einer zweiten Verfahrensaktion 200 werden zwei direkt benachbarte erste Hairpinenden 9 der inneren Nutlagen 7 mit einem gemeinsamen Schränkwerkzeug 10 gegriffen.

In einer dritten Verfahrensaktion 300 werden die von dem gemeinsamen Schränkwerkzeug 10 gemeinsam gegriffenen ersten Hairpinenden 9 mit dem gemeinsamen Schränkwerkzeug 10 gemeinsam geschränkt. Das Schränken erfolgt vorzugsweise derart, dass benachbarte Schränkwerkzeuge 10 abwechselnd in unterschiedliche Richtungen schränken. In einer vierten Verfahrensaktion 400 werden die ersten Hairpinenden 9 unterschiedlicher Statornuten 4 mit einer Schweißvorrichtung paarweise verschweißt. Hierdurch wird eine Statorwicklung gebildet.

### Bezugszeichenliste

- 1: Stator
- 2: Elektromaschine
- 3: Statorgrundkörper
- 4: Statornut
- 5: Hairpin
- 6: erste Nutlage
- 7: innere Nutlage
- 8: letzte Nutlage
- 9: erstes Hairpinende
- 10: Schränkwerkzeug
- 11: Rotor
- 12: Motorgehäuse
- 13: Gehäusedeckel
- 14: Leistungselektronik

- 100: erste Verfahrensaktion
- 200: zweite Verfahrensaktion
- 300: dritte Verfahrensaktion
- 400: vierte Verfahrensaktion

- L: Statorlängsachse
- R: radiale Richtung

## Patentansprüche

1. Verfahren zum Herstellen eines Stators (1) für eine Elektromaschine (2), aufweisend:
- Bereitstellen eines Statorgrundkörpers (3) mit Statornuten (4), wobei in den Statornuten (4) Hairpins (5) angeordnet sind, wobei die Hairpins (5) in einer ersten Nutlage (6), mehreren inneren Nutlagen (7) sowie einer letzten Nutlage (8) in den Statornuten (4) angeordnet sind, wobei freie erste Hairpinenden (9) der Hairpins (5) aus dem Statorgrundkörper (3) herausragen,
- Greifen von zwei in radialer Richtung (R) direkt benachbarten ersten Hairpinenden (9) mit einem gemeinsamen Schränkwerkzeug (10),
- Gemeinsames Schränken der ersten Hairpinenden (9) mit dem gemeinsamen Schränkwerkzeug (10), und
- Verschweißen der ersten Hairpinenden (9) unterschiedlicher Statornuten (4) mit einer Schweißvorrichtung.

2. Verfahren nach Anspruch 1,
**dadurch gekennzeichnet,**
**dass** das erste Hairpinende (9) der ersten Nutlage (6) und/oder das erste Hairpinende (9) der letzten Nutlage (8) mit jeweils einem eigenen Schränkwerkzeug (10) einzeln gegriffen und geschränkt wird.

3. Verfahren nach Anspruch 1 oder 2,
**dadurch gekennzeichnet,**
**dass** die ersten Hairpinenden (9) der inneren Nutlagen (7) jeweils paarweise mit einem gemeinsamen Schränkwerkzeug (10) miteinander gegriffen und geschränkt werden.

4. Verfahren nach wenigstens einem der vorangegangenen Ansprüche,
**dadurch gekennzeichnet,**
**dass** ein Statorgrundkörper (3) bereitgestellt wird, bei welchem freie zweite Hairpinenden der Hairpins (5) aus dem Statorgrundkörper (3) herausragen, wobei die ersten Hairpinenden (9) und die zweiten Hairpinenden an entgegengesetzten Enden der Hairpins (5) ausgebildet sind, wobei zwei in radialer Richtung (R) direkt benachbarte zweite Hairpinenden mit einem gemeinsamen Schränkwerkzeug (10) gegriffen und gemeinsam geschränkt werden, und wobei die zweiten Hairpinenden unterschiedlicher Statornuten (4) mit der Schweißvorrichtung verschweißt werden.

5. Verfahren nach Anspruch 4,
**dadurch gekennzeichnet,**
**dass** das zweite Hairpinende der ersten Nutlage (6) und/oder der letzten Nutlage (8) mit jeweils einem eigenen Schränkwerkzeug (10) einzeln gegriffen und geschränkt wird.

6. Verfahren nach Anspruch 4 oder 5,
**dadurch gekennzeichnet,**
**dass** die zweiten Hairpinenden der inneren Nutlagen (7) jeweils paarweise mit einem gemeinsamen Schränkwerkzeug (10) miteinander gegriffen und geschränkt werden.

7. Verfahren nach wenigstens einem der vorangegangenen Ansprüche,
**dadurch gekennzeichnet,**
**dass** der Statorgrundkörper (3) mit acht Hairpins (5) pro Statornut (4) bereitgestellt wird, wobei fünf Schränkwerkzeuge (10) verwendet werden, wobei die ersten Hairpinenden (9) der äußeren Nutlagen (8) mit jeweils einem der Schränkwerkzeuge (10) und die ersten Hairpinenden (9) benachbarter innerer Nutlagen (7) jeweils paarweise mit einem der Schränkwerkzeuge (10) gegriffen und geschränkt werden.

8. Verfahren nach wenigstens einem der vorangegangenen Ansprüche,
**dadurch gekennzeichnet,**
**dass** die paarweise mittels eines der Schränkwerkzeuge (10) gegriffenen ersten Hairpinenden (9) in radialer Richtung (R) voneinander separiert werden.

9. Verfahren nach Anspruch 8,
**dadurch gekennzeichnet,**
**dass** das in radialer Richtung (R) weiter innen liegende erste Hairpinende (9) in Richtung einer Statorlängsachse (L) des Statorgrundkörpers (3) geformt und/oder das in radialer Richtung (R) weiter außen liegende erste Hairpinende (9) von der Statorlängsachse (L) weg geformt wird.

10. Elektromaschine (2), aufweisend einen Stator (1) und einen koaxial zum Stator (1) angeordneten Rotor (11),
**dadurch gekennzeichnet,**
**dass** der Stator (1) durch ein Verfahren nach einem der vorangegangenen Ansprüche hergestellt ist.
